(19) Europäisches Patentamt

European Patent Office

Office européen des brevets

(11) **EP 1 123 820 B1**

(12) **FASCICULE DE BREVET EUROPEEN**

(45) Date de publication et mention
de la délivrance du brevet:
**17.12.2003   Bulletin 2003/51**

(51) Int Cl.⁷: **B60C 15/00**

(21) Numéro de dépôt: **01106876.4**

(22) Date de dépôt: **13.06.1996**

(54) **Pneumatique comportant des câbles circonférentiels pour ancrer la carcasse**

Reifen mit Umfangskorden zur Karkassverankerung

Tyre comprising circumferential cords for anchoring the carcass

(84) Etats contractants désignés:
**BE CH DE ES FR GB IT LI LU NL PT SE**

(30) Priorité:  **29.06.1995  FR 9507977**

(43) Date de publication de la demande:
**16.08.2001   Bulletin 2001/33**

(62) Numéro(s) de document de la (des) demande(s)
initiale(s) en application de l'article 76 CBE:
**96109461.2 / 0 751 015**

(73) Titulaire: **SEDEPRO**
**F-75015 Paris (FR)**

(72) Inventeur: **Costa Pereira, Pedro**
**63000 Clermont-Ferrand (FR)**

(74) Mandataire: **Bauvir, Jacques**
**Michelin & Cie,**
**Service SGD/LG/PI-LAD**
**63040 Clermont-Ferrand Cedex 09 (FR)**

(56) Documents cités:
**EP-A- 0 582 196**          **FR-A- 1 234 995**
**FR-A- 2 055 988**

**Description**

La présente invention se rapporte aux pneumatiques. Plus particulièrement, elle concerne la conception des bourrelets de ceux-ci.

On connaît le rôle des bourrelets des pneumatiques : il s'agit d'assurer "l'accrochage" du pneumatique sur la jante sur laquelle il est monté. A cette fin, les câbles de carcasse rejoignent tous la partie basse du bourrelet, où ils sont fermement ancrés, afin que la carcasse résiste aux efforts de tension en service.

Tout récemment, un nouveau type de bourrelet a été proposé dans la demande de brevet EP 0582196. Ce bourrelet est dépourvu de l'habituel retournement de la carcasse autour d'une tringle. Au lieu de cela, à l'endroit de l'ancrage, les éléments renforçants de carcasse sont disposés en un ou plusieurs alignements. En imaginant la disposition de l'ensemble de ces éléments dans l'espace, ceux-ci dessinent approximativement, à l'intérieur de chaque alignement, un tronc de cône partiel d'axe confondu avec l'axe de rotation du pneumatique. Les éléments renforçants de carcasse sont bordés latéralement par au moins une pile d'éléments renforçants circonférentiels, réalisée par exemple par bobinage en spirale. En outre, un mélange de caoutchouc de liaison approprié assure la transmission des efforts entre ces éléments renforçants orientés perpendiculairement les uns par rapport aux autres.

Les essais du déposant ont montré qu'une telle structure de bourrelet résiste parfaitement aux sollicitations rencontrées en utilisation, même sévère, et ceci aussi bien pour des pneumatiques pour véhicules de tourisme que pour d'autres applications. En dehors des sollicitations dues à l'utilisation proprement dite du pneumatique, celui-ci doit en outre être capable de subir un nombre indéterminé de démontages suivis de remontages pour en poursuivre l'utilisation.

On sait que, lorsque le pneumatique est monté sur une roue, plus le serrage du bourrelet est important, plus faible sera la tendance du pneumatique à déjanter. Pour rappel, le serrage est l'effort de compression de la gomme située dans la partie radialement la plus basse du bourrelet, développant une pression sur la surface radialement extérieure du siège de la jante correspondante. Un certain niveau de serrage est nécessaire pour pouvoir transmettre un couple freineur ou moteur entre la jante et le pneumatique. Le serrage dépend non seulement des caractéristiques propres du pneumatique (géométrie du bourrelet, rigidité des matériaux qui y sont employés) mais aussi de la géométrie de la jante elle-même.

Mais on sait aussi que plus le serrage est important, plus grandes seront les difficultés pour monter et/ou démonter le pneu. Le démontage notamment implique d'appliquer un effort assez important (fonction du serrage sur la jante) sur le bourrelet au niveau du crochet de la jante, ou juste au dessus de celui-ci. Cet effort est orienté parallèlement à l'axe de rotation et est toujours appliqué localement par un poussoir ou un levier. Ces outils appliquent une déformation sur le bourrelet du pneumatique. Cette déformation peut être très importante. C'est la première phase du démontage dont le but est de décoincer le bourrelet, c'est à dire de lui faire quitter son siège en l'éloignant du rebord de jante. Pendant cette première phase, le bourrelet du pneumatique est soumis à des efforts d'extension localisés, mais très importants.

Ensuite, on utilise en général des leviers pour contraindre le bourrelet à franchir le rebord de jante. En effet, dans le cas des jantes en une seule pièce (cas de loin le plus courant pour les pneumatiques pour véhicules de tourisme et pour camionnettes), la forme de la jante est conçue pour permettre le montage et le démontage grâce à une ovalisation du bourrelet, sans augmentation du périmètre de celui-ci. Cela conditionne notamment le dessin du creux central de montage et des rebords bordant latéralement la jante et définissant la position de montage du bourrelet. Pendant cette seconde phase, le bourrelet subit une déformation d'ensemble qui est bien moins pénalisante que les sollicitations survenant pendant la première phase.

Le concepteur du pneumatique cherche à atteindre un bon compromis entre la sécurité (faible sensibilité au déjantage) obtenue en agissant notamment sur le serrage, et la facilité de montage/démontage. Le respect de ces impératifs (sollicitations de service et sollicitations au montage et démontage) quelque peu contradictoires et la volonté de simplifier la fabrication et de limiter le poids de matière sont des objectifs de la présente invention.

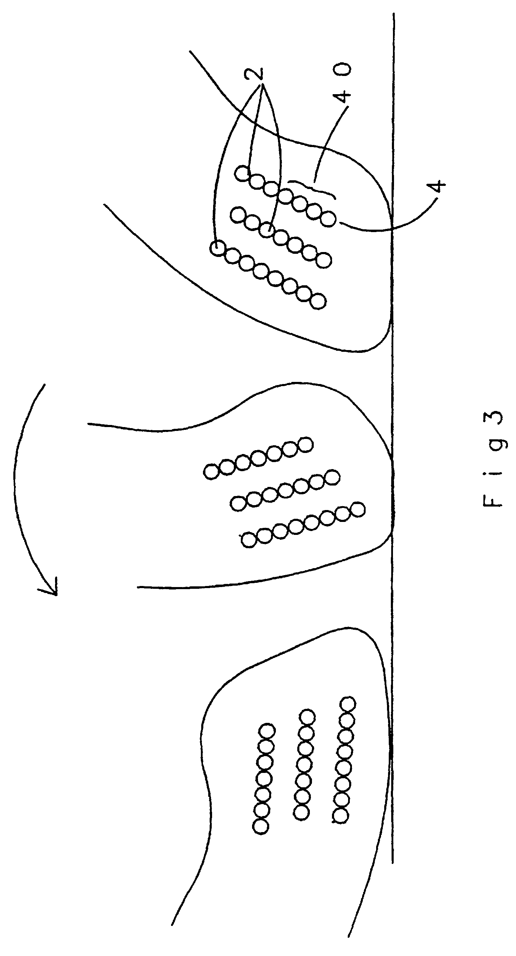

Plus précisément, un objectif de l'invention est d'améliorer l'aptitude de la structure de bourrelet décrite dans le brevet EP 0582196 précité à subir des démontages même réalisés dans des conditions peu soigneuses, notamment avec des outils déréglés. Dans ce cas, au cours de la première phase du démontage, la pointe du bourrelet, retenue par un hump, subit une rotation centrée sensiblement sur ladite pointe (voir figure 3) parce que ce type de bourrelet est assez souple en rotation dans un plan radial. Si cette rotation va jusqu'à un basculement du bourrelet, comme représenté à la figure 3, une partie des spires de câble circonférentiel 2 subit un allongement très important. Cet allongement peut atteindre environ 3 % pour les spires 40 les plus basses de la pile 4 axialement extérieure. Dans les cas extrêmes, si cet allongement se combine avec une déformation locale due à la pression de l'outil de démontage, le démontage peut causer la rupture du câble dans une ou plusieurs spires.

En particulier, la présente invention vise à permettre un très grand nombre de démontages avec réutilisation possible du pneumatique, sans sacrifier les performances du pneumatique en usage.

Selon l'invention, le pneumatique comporte des flancs se terminant par des bourrelets, ceux-ci étant conçus pour être montés sur une jante, ledit pneumatique comportant une armature de carcasse passant dans les flancs et rejoignant les bourrelets, l'un au moins desdits bourrelets comprenant :

- des éléments renforçants de carcasse allant de la partie radialement basse du bourrelet vers le flanc,
- au moins une pile de câbles circonférentiels bordant latéralement les éléments renforçants de carcasse, lesdits câbles circonférentiels ayant un taux d'allongement fonctionnel $A_f = A_e + A_p$ supérieur à 4%,
- un mélange de caoutchouc de liaison disposé entre les câbles circonférentiels et les éléments renforçants de carcasse.

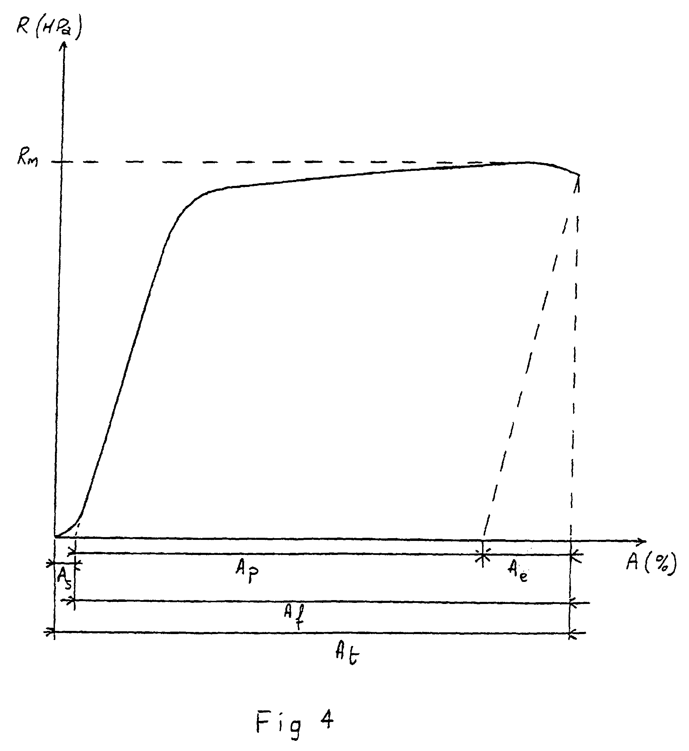

La figure 4 montre un diagramme de contrainte en fonction de l'allongement. On note d'abord un allongement $A_s$, spécifique de l'effet câble. Cet allongement traduit un resserrement des fils du câble, avant même de solliciter lesdits fils en traction. Sur le diagramme, on note ensuite un allongement plastique $A_p$ et enfin un allongement élastique $A_e$.

Pour la description de l'invention, nous introduisons ici la notion de taux d'allongement fonctionnel $A_f = A_e + A_p$. Ce taux d'allongement fonctionnel ne comprend pas l'allongement spécifique $A_s$ de l'effet "câble".

Quant à la contrainte maximale, elle est déterminée par la formule suivante :

$$R_m = \frac{F_m \rho}{M/L}$$

où $F_m$ est la force maximale, $\rho$ est la masse volumique de la matière considérée (7.8 gr/cm$^3$ pour l'acier utilisé), et M/L est la masse linéique du câble utilisé.

De préférence, la contrainte maximale $R_m$ est supérieure à 2000 MPa, et même avantageusement supérieure à 2200 MPa, ce qui permet de construire un bourrelet aussi léger que possible, la légèreté étant en soi un facteur de performance et contribuant à limiter le coût du pneumatique.

L'invention sera parfaitement comprise grâce à la consultation de la description suivante, illustrant à l'aide des figures jointes et de façon non limitative, un exemple de réalisation concret d'un bourrelet de pneumatique.

Les figures 1 et 2 sont des coupes radiales de deux variantes d'un bourrelet de pneumatique selon l'invention.
La figure 3 illustre la rotation du bourrelet lors du démontage d'un pneumatique.
La figure 4 illustre les différents allongements caractérisant un câble.
La figure 5 illustre les caractéristiques d'éléments de renforcement utilisés dans les bourrelets de pneumatique.
Les figures 6 et 7 illustrent des variantes de réalisation de l'invention.
La figure 8 illustre une autre variante, sollicitée en rotation lors du démontage d'un pneumatique.

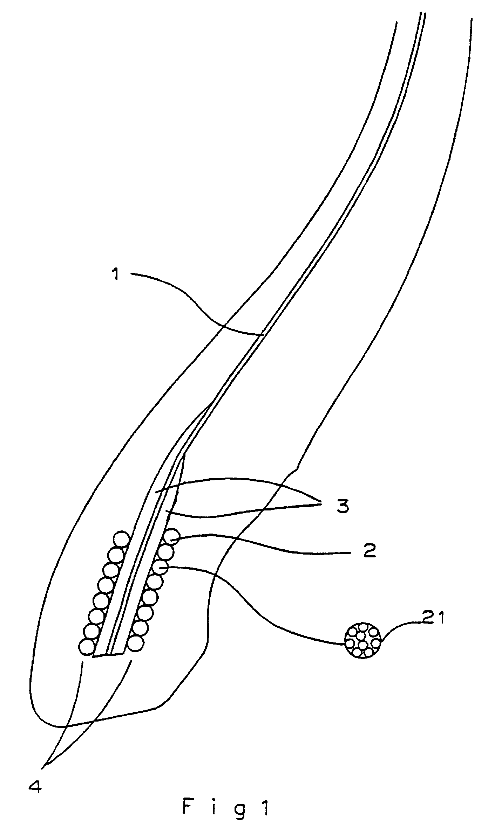

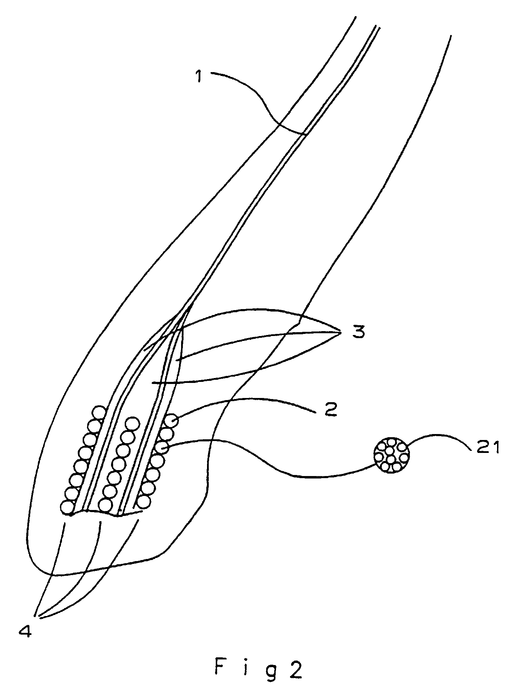

Aux figures 1 et 2, on voit un bourrelet dans lequel on aperçoit des éléments renforçants 1 de carcasse et des câbles circonférentiels 2.

Dans le présent mémoire, on réservera le terme "fil" au mono-filament résultant d'une opération de filage ou de tréfilage ou de laminage ou une opération équivalente. Un câble est un assemblage de plusieurs fils fins. Dans le cas de fils d'acier, il s'agit de fils de diamètre compris environ entre 0.05 mm et 0.8 mm. Le présent mémoire n'aborde pas les différentes méthodes de réalisation d'un tel assemblage, qui sont nombreuses et bien connues de l'homme du métier. Le terme "câble" renvoie indistinctement à tous les types d'assemblage de fils (par exemple des torons, des retors ou câbles proprement dits).

Lorsque l'on parle d'un "élément renforçant", on vise alors de façon générique aussi bien des câbles que des mono-filaments, quelle que soit l'allure dudit élément, pourvu qu'elle soit filiforme, et quelle que soit la matière de celui-ci. Par exemple, un cablé en rayonne ou en aramide rentre dans cette définition générique.

Les éléments renforçants 1 de carcasse sont indifféremment constitués par des câbles, métalliques ou non métalliques ou des mono-filaments. L'ancrage des éléments renforçants 1 de carcasse est assuré par des câbles circonférentiels 2, avec interposition d'une composition de caoutchouc de liaison 3. De préférence, ladite composition est le mélange "MS" dont la formulation est donnée ci-dessous, au point 6 après le premier tableau. Le câble circonférentiel 2 est disposé en plusieurs tours formant une ou plusieurs spirales. Le lecteur pourra trouver plus de détails concernant ce type de bourrelet dans la demande de brevet EP 0582196 précitée. Ces câbles 2 sont eux-mêmes constitués de l'assemblage de plusieurs fils 21, bien visibles aux agrandissements dessinés aux figures 1 et 2, à l'intérieur de cercles reportés à droite du bourrelet.

Pour fixer les idées, on peut utiliser un câble (2+7)0.28 non fretté. Ce câble est constitué d'une âme composée de 2 fils retordus, entourée par une couche de 7 fils également retordus ensemble en sens contraire. Cependant, le modèle précis d'assemblage n'a pas d'incidence particulière pour mettre en oeuvre l'invention. En revanche, les essais du déposant l'ont conduit à observer qu'il n'était pas indifférent d'utiliser n'importe quel câble d'acier.

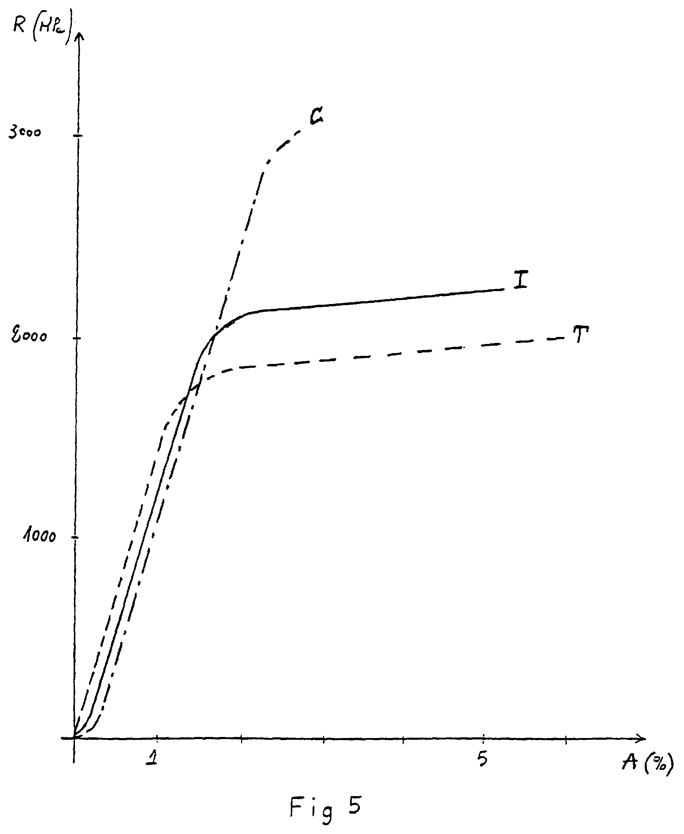

La figure 5 donne un diagramme de contrainte en fonction de l'allongement pour un câble classique (courbe C), pour un câble selon l'invention (courbe I) et pour du fil tringle d'un type classique (courbe T). Au titre d'illustration générale, on peut citer le brevet US 5010938 qui illustre un schéma de bobinage du genre classiquement utilisé pour constituer une tringle. Celle-ci est réalisée par bobinage de plusieurs spires jointives d'un fil tringle. On appelle "fil tringle" un fil d'acier de diamètre assez important, de l'ordre de 0.8 mm, ou plus encore. Ce fil tringle est souvent du fil à grand allongement et présente une contrainte maximale $R_m$ valant environ 2000 MPa (Méga Pascal- voir courbe T de la figure 5). L'allongement fonctionnel, correspondant ici à l'allongement total $A_t$, est élevé, de l'ordre de 6%.

La courbe C illustre la caractéristique, après vulcanisation en pneu, d'un câble en acier couramment utilisé en nappes de sommet. On peut noter un allongement fonctionnel $A_f$ valant environ 2%, ainsi qu'un faible allongement $A_s$ spécifique de l'effet "câble", donc de l'architecture du câble utilisé. La rupture intervient à un niveau de contrainte $R_m$ élevé, pouvant atteindre 3000 MPa.

L'invention vise à obtenir une grande résistance aux démontages successifs, tout en conservant l'avantage de la structure de bourrelet décrite dans le brevet EP 0582196 précité. En outre, l'invention se propose d'obtenir cette résistance aux démontages tout en utilisant des matériaux à contrainte maximale élevée, ce qui limite la quantité de matière à utiliser et allège d'autant le pneu. De par l'utilisation de câbles, un autre avantage de l'invention est la plus grande facilité de fabrication du pneu car les câbles sont moins difficiles à mettre en oeuvre (parce que plus souples) que des fils de diamètre plus grand comme des fils tringles.

Le pneumatique de l'invention utilise un câble 2 bien particulier pour réaliser les piles 4 d'éléments renforçants. Ce câble jouit à la fois d'une contrainte maximale assez élevée, au moins aussi élevée que celle dont jouissent les tringles classiques, et d'un grand allongement, allongement bien plus grand que celui présenté par les câbles classiques.

On va maintenant décrire comment un tel câble peut être obtenu par un traitement thermique particulier.

L'influence du traitement thermique sur la variation de l'allongement fonctionnel $A_f$ est fonction de la composition chimique et du taux d'écrouissage du fil d'acier, de la durée et de la température du traitement thermique. Afin d'obtenir un supplément très significatif de l'allongement fonctionnel $A_f$, il est préférable que le taux d'écrouissage $\varepsilon$ du fil utilisé reste inférieur à une valeur comprise entre 3.5 et 4, la valeur limite précise dépendant de la composition chimique du fil d'acier. Le taux $\varepsilon$ est défini par la relation suivante : $\varepsilon = \ln(S_o/S_f)$ où $S_o$ est la surface de la section du fil avant écrouissage et $S_f$ la surface de la section du fil après écrouissage.

On sait que les renforts en acier pour les pneus possèdent une résistance élevée à la traction, et possèdent un bon pouvoir d'adhésion à la gomme. La résistance est obtenue lors de la mise en forme du fil d'acier par un procédé connu par l'homme de métier, par exemple par tréfilage. Cette opération, menée sur du fil fin, nécessite un coulant de tréfilage. Dans les applications aux pneus, ce coulant de tréfilage est généralement formé par un revêtement adhérisant classique, le plus souvent en laiton, déposé sur le fil d'acier pour favoriser l'adhésion du caoutchouc sur ledit fil d'acier. En variante, le revêtement adhérisant pourrait être constitué par un alliage à base de Cu, de Zn et de Ni, ou encore tout revêtement favorisant l'adhésion au caoutchouc tout en jouant le rôle de coulant de tréfilage. Plusieurs fils peuvent ensuite être assemblés de manière à former un câble. On obtient ainsi un renfort constitué de fil d'acier écroui et couvert d'un revêtement adhérisant. Ces renforts sont caractérisés par une faible ductilité de l'assemblage ou/et des fils constitutifs (voir courbe C à la figure 5).

Un traitement thermique réalisé postérieurement à l'écrouissage pour augmenter la ductilité est connu en soi. L'opération de revêtement (par exemple un laitonnage) intervient généralement après ledit traitement thermique, pour ne pas dégrader le revêtement.

Par exemple, le brevet FR 2152078 décrit un moyen permettant d'améliorer la ductilité, par une modification de structure. Il y est décrit comment on peut obtenir un matériau ayant une structure martensitique revenue. Dans ce brevet FR 2152078, on dépasse un niveau de température de l'ordre de 800°C. Le revêtement en laiton ne peut être déposé qu'après ce type de traitement thermique car sinon, aux températures atteintes, le revêtement de laiton serait détruit et ce renfort serait inutilisable en pneumatique car non adhérent au caoutchouc. Par la suite, ce brevet décrit un traitement thermique de revenu, qui est appliqué à une structure substantiellement martensitique, et trempée. De plus, puisque le revenu s'effectue en bain de plomb, une opération de nettoyage s'impose alors, ce qui serait très problématique si l'on cherchait à appliquer ce procédé à des assemblages comme des câbles et non pas à un mono-filament (fil unitaire) car le nettoyage est une opération très délicate à effectuer sur des câbles torsadés. Enfin, le revêtement classique en laiton ne peut pas être déposé avant le revenu, car le matériau est insuffisamment ductile. Si on le dépose sur le câble après le revenu, il est très difficile d'assurer l'homogénéité du revêtement en laiton. On voit donc que ce brevet n'apporte pas de solution satisfaisante pour préserver l'adhérence du câble au caoutchouc.

Dans le cadre d'une autre invention du même déposant, il est proposé différents procédés de préparation qui se sont révélés être particulièrement avantageux. Ces procédés, intéressants en soi, sont en outre préférentiellement appliqués à des câbles dont le fil d'acier comporte une teneur en carbone comprise entre 0.7% et 0.9%.

On réalise d'un traitement thermique par effet Joule (désigné ci après par EJ) à une température comprise entre 400°C et 500°C, pendant une durée inférieure ou égale à 5 secondes. Les temps donnés sont les temps de chauffage ; ils ne comprennent pas le temps de refroidissement. On peut aussi citer le traitement thermique par convection statique (désigné ci après par CV), la convection étant de préférence réalisée sous atmosphère protectrice et à une température inférieure à 420°C, et dans ce cas le refroidissement qui s'en suit est lui aussi mené sous atmosphère protectrice. On peut encore citer le traitement thermique par induction (désigné ci après par IN), la température étant comprise entre 400°C et 550°C et le temps de chauffage étant inférieur ou égale à 1 seconde.

On peut également réaliser le traitement thermique par EJ ou par IN sous atmosphère protectrice, pour limiter autant que possible la dégradation du revêtement (par exemple l'oxydation du laiton). Dans ce cas, il est préférable de maintenir le câble sous atmosphère protectrice pendant le refroidissement. En variante ou en supplément à l'utilisation d'une atmosphère protectrice, on peut pour tous ces traitements thermiques prévoir une opération de décapage, suivie comme connu par un rinçage à l'eau et un séchage.

On peut réaliser aussi un traitement de recuit de restauration, réalisé à basse température. On entend par cela une température qui soit en tout cas inférieure à $Ac_1$ (température correspondant à une transformation de la structure cristalline de l'acier) et de préférence inférieure ou égale à 550°C, tout en étant généralement supérieure à 250°C. C'est aussi un traitement réalisé directement sur câble comportant des fils couverts séparément par un revêtement adhérisant.

La limite de température dépend en réalité du temps et du mode de chauffage. Il semble que l'énergie apportée au câble doive être sensiblement identique pour tous les traitements thermiques. Les températures données sont des températures atteintes en surface du câble. Elles peuvent être mesurées par exemple par thermovision, ou par jauge de contact lorsque c'est possible. Elles sont relevées pendant le traitement thermique lui-même, ou juste après lorsqu'il est en pratique difficile de faire autrement. C'est ici le cas des valeurs données pour le traitement thermique IN.

Le traitement thermique porte la capacité d'allongement fonctionnel $A_f$ du câble à une valeur supérieure à environ 4%, tout en maintenant la résistance à la traction à un niveau suffisant pour le pneumatique (contrainte maximale $R_m$ valant environ au moins 2000 MPa après traitement thermique) ainsi qu'en maintenant une aptitude à adhérer au caoutchouc suffisante. La courbe I à la figure 5 décrit une caractéristique typique d'un tel câble. On a bien précisé qu'il s'agit d'un supplément de capacité d'allongement fonctionnel car les valeurs données ne comprennent pas l'allongement $A_s$ spécifique de l'effet "câble". Or le supplément de capacité d'allongement fonctionnel ne dépend pas de l'architecture du câble, à matériau identique, mais dépend essentiellement du traitement thermique.

Le fil utilisé est plus généralement en acier écroui à teneur élevée en carbone (comprise entre 0.4% et 1.0% C), et comprenant éventuellement les éléments classiques tels que du manganèse et du silicium pour augmenter certaines propriétés spécifiquement requises comme cela est connu par les hommes de métier, et comprenant en outre des impuretés en quantité mineure. La mise en forme, jusqu'au diamètre final peut être effectuée par un procédé quelconque, par exemple par tréfilage. Les fils sont assemblés entre eux de manière à former un câble, par un procédé convenable d'assemblage (retordage ou câblage proprement dit).

Le câble traité est constitué de fils élémentaires écrouis et revêtus. Le traitement thermique sur câble (c'est à dire après assemblage) permet de traiter simultanément tous les fils en une seule opération.

Dans les exemples suivants, on décrit les procédés utilisés et les résultats obtenus. On utilise partout du fil d'acier essentiellement perlitique, écroui et laitonné, constituant un câble non fretté. Sa composition chimique précise, donnée relativement au poids de l'acier, est la suivante : teneur en carbone 0.81%, en manganèse : 0.54%, en silicium : 0.25%, en phosphore : 0.01 %, en soufre : 0.01 %, en chrome 0.11%, en nickel : 0.03%, en cuivre : 0.01%, en aluminium : 0.005%, en azote : 0.003%.

Exemple 1 : Traitement par effet joule (EJ) sur un câble (2+7)0.28

Le principe consiste à chauffer le câble en continu pendant son défilement, par effet Joule sous atmosphère protectrice (par exemple un mélange d'azote et d'hydrogène). La durée de chauffage est d'environ 2.7 secondes. La température de traitement est de 450°C. Après le chauffage, le câble est refroidi sous atmosphère protectrice (N2,H2) puis enroulé sur des bobines. Il présente les caractéristiques suivantes :

| (2+7)0.28 | $R_m$ (MPa) | $\Delta R_m$ (%) | $A_f$ (%) | adh test | $\Delta$ adh (%) test | adh MS | $\Delta$ adh (%) MS |
|---|---|---|---|---|---|---|---|
| avant TTBT | 2920 | | 2.8 | 78 | | 90 | |
| EJ/N2,H2 | 2497 | -14 | 5.0 | 56 | -28 | 93 | +3 |

où, dans cet exemple comme dans les suivants :

1. TTBT signifie "traitement thermique à basse température" ;
2. les valeurs d'adhésion (adh) donnent une appréciation de la qualité de la liaison entre le câble et une composition de caoutchouc formant un bloc dans lequel ledit câble est noyé, l'ensemble étant vulcanisé tout en laissant une partie du câble déborder hors dudit bloc pour constituer ainsi une éprouvette de test ; les valeurs données correspondent à la mesure de la force nécessaire pour extraire le câble hors du caoutchouc ;

3. toutes les variations ($\Delta$) sont indiquées en pourcentage ; pour permettre le classement des différentes solutions par une lecture comparative ;

4. l'aptitude intrinsèque du câble à adhérer sur du caoutchouc est contrôlée expérimentalement sur ladite éprouvette en observant l'effort à partir duquel se séparent le câble et la matrice ;

5. les colonnes "test" correspondent à une matrice en mélange dit de test, comportant 100% de NR (caoutchouc naturel), avec addition de charges renforçantes pour obtenir une dureté Shore A convenable, supérieure à 70, un taux de soufre important, compris entre 5% et 8%, et un taux de cobalt élevé, compris entre 0.3% et 0.4% (les pourcentages étant donnés en référence au poids total d'élastomère) ; quant à son aptitude à adhérer au câble, ce mélange est très sensible aux variations chimiques du revêtement en laiton sur le câble ;

6. les colonnes "MS" correspondent au mélange préférentiel décrit ci-dessous par référence au brevet EP 0582196. Pour rappel, ledit mélange comporte un élastomère synthétique SBR utilisé seul ou en coupage avec du polybutadiène (PB), ledit SBR ayant une température de transition vitreuse (Tg) comprise entre -70°C et -30°C et ledit PB ayant une Tg comprise entre -40°C et -10°C, le ou lesdits élastomères synthétiques étant utilisés en proportion totalisée d'au moins 40 % du poids total d'élastomère, le solde étant constitué par du caoutchouc naturel. Les Tg considérées sont mesurées par analyse thermique différentielle. De préférence, on utilise un mélange contenant 50 % de SBR solution ayant une Tg valant -48°C, 50 % de NR, avec addition de charges renforçantes et de résine pour obtenir la dureté Shore A convenable, supérieure à 70. De préférence, pour obtenir un bon collage du mélange sur un fil laitonné, on utilise un taux de soufre important, compris entre 5% et 8% du poids total d'élastomères, et on utilise du cobalt en quantité de l'ordre de 0.2% du poids total d'élastomères.

Exemple 2 : Traitement par convection (CV) sur un câble (2+7)0.28, suivi d'un décapage (DECA).

Le câble est traité dans un four à convection statique (four de recuit de restauration) sous atmosphère protectrice contrôlée, par exemple azote hydrogéné à 6% d'hydrogène. On le chauffe jusqu'à 350°C en 3 heures 30. On effectue ensuite un maintien à la même température pendant 30 minutes. Puis on le refroidit jusqu'à température ambiante en 3 heures. Les bobines sont ensuite déroulées pour permettre le passage du câble dans un bain d'acide orthophosphorique ou sulfurique à très faible concentration (environ 4%). Le temps de séjour dans ce bain de décapage est de l'ordre de 2 secondes. Le bain est à la température ambiante. Les caractéristiques obtenues sont les suivantes :

| (2+7)0.28 | $R_m$ (MPa) | $\Delta R_m$ (%) | $A_f$ (%) | adh test | $\Delta$ adh (%) test | adh MS | $\Delta$ adh (%) MS |
|---|---|---|---|---|---|---|---|
| avant TTBT | 2920 | | 2.8 | 78 | | 90 | |
| CV + DECA | 2443 | -16 | 5.4 | 67 | -14 | 85 | -6 |

Exemple 3 : Traitement par induction (IN) sur un câble (2+7)0.28.

Le câble est chauffé au défilé par induction, sous atmosphère protectrice (NH3 craqué ou N2,H2). Le recuit de restauration se fait par induction électromagnétique en faisant circuler des courants induits sur une longueur de l'ordre de 40 cm, la vitesse de traitement peut être variable (80 m/min par exemple), l'ensemble étant réglé pour obtenir un traitement thermique homogène du câble. La température relevée en surface du câble et en sortie de l'inducteur est de l'ordre de 450 °C. Les caractéristiques obtenues sont les suivantes :

| (2+7)0.28 | $R_m$ (MPa) | $\Delta R_m$ (%) | $A_f$ (%) | adh test | $\Delta$ adh (%) test | adh MS | $\Delta$ adh (%) MS |
|---|---|---|---|---|---|---|---|
| avant TTBT | 2920 | | 2.8 | 78 | | 90 | |
| IN/N2,H2 | 2524 | -14 | 5.4 | 39 | -50 | 86 | -4 |

Exemple 4 : Traitement par effet joule (EJ) sur un câble (3+8)0.35, sous atmosphère protectrice.

| (3+8)0.35 | $R_m$ (MPa) | $\Delta R_m$ (%) | $A_f$ (%) | adh test | $\Delta$ adh (%) test | adh MS | $\Delta$ adh (%) MS |
|---|---|---|---|---|---|---|---|
| avant TTBT | 2537 | | 3.09 | 90 | | 85 | |
| EJ/N2,H2 | 2410 | -5 | 5.31 | 68 | -24 | 101 | +19 |

L'analyse de ces exemples permet de noter que la valeur absolue de l'adhésion du caoutchouc sur le câble dépend aussi de la formule de mélange de caoutchouc utilisée. On peut ainsi accepter une plus ou moins grande altération du revêtement adhérisant due au traitement thermique, selon la formulation du mélange que l'on utilise pour le caoutchouc de liaison 3.

Si l'on emploie le mélange MS précité, on peut accepter une déchéance plus grande (de l'ordre de 70% sur le mélange "test") car les performances en adhésion obtenues avec ce mélange sont moins sensibles à une modification de la nature chimique du revêtement lors du traitement thermique à basse température. Mais de préférence, on ne retiendra que les solutions qui présentent sur le mélange test une déchéance inférieure à 50%. Dans tous les exemples ci-dessus et en particulier dans l'exemple 3, on peut noter que le mélange MS offre la meilleure aptitude à contenir la déchéance à un niveau faible dans les cas les plus défavorables. Cependant, d'autres types de mélanges pourraient être formulés et cette dernière remarque n'est pas limitative. D'autres conditions de réalisation des traitements thermiques pourraient être utilisées ; il est possible que dans certains cas, on aboutisse à une déchéance moindre de l'adhésion, ce qui rendrait possible l'utilisation dudit mélange "test" pour la couche 3, ou bien encore l'utilisation d'un autre mélange éventuellement moins favorable à l'adhésion que le mélange MS.

On connaît déjà un procédé de préparation d'un câble pour pneu, dans lequel, partant d'un câble réalisé en fil d'acier écroui et couvert d'un revêtement adhérisant favorisant l'adhésion entre l'acier et le caoutchouc, on soumet ledit câble à un traitement thermique de recuit de restauration, à une température comprise entre $250°C$ et $Ac_1$, pendant une durée présélectionnée de façon à porter le taux d'allongement fonctionnel $A_f$ à une valeur supérieure à 4%, mettant en oeuvre des moyens tels que, en contrôlant l'aptitude d'un tel câble à adhérer à un mélange de caoutchouc dit de "test" avant et après ladite préparation, la déchéance observée est inférieure ou égale à 70%.

Lesdits moyens peuvent être un décapage du câble d'acier postérieurement au TTBT, ou le choix d'une atmosphère suffisamment protectrice pendant le TTBT et le refroidissement qui le suit, ou tout autre moyen d'effet équivalent.

Grâce à ce procédé on conserve une bonne adhésion entre caoutchouc et métal. De plus, en cas de sollicitations importantes au démontage, le câble 2 dépasse la limite élastique mais reste toujours sous la limite de rupture. Le câble conserve donc une zone de comportement élastique même là où un effort localisé l'a porté au delà de sa limite élastique initiale. Même s'il subsiste un allongement résiduel important (de l'ordre de 2 à 3%) dans la zone sollicitée par un démontage, cet allongement rapporté sur le périmètre total d'un spire de câble 2 ne représente qu'une valeur de l'ordre de 1 pour 1000, ce qui ne perturbe en rien la bonne tenue du pneu sur la jante après un nouveau montage.

La valeur d'usage du pneu ainsi réalisé n'est en rien altérée par les quelques cycles de démontage et montage qu'un pneu subit au cours de son service, et ceci d'autant plus que même s'il se produit un allongement dépassant la limite élastique lors de chaque démontage, non seulement cet allongement ne concerne qu'une toute petite longueur du câble, comme on l'a vu, mais en outre un tel allongement ne survient que sur une petite partie des spires superposées, et préférentiellement pour la pile axialement extérieure du bourrelet.

On a vu ci-dessus l'utilisation d'un câble bien particulier, à grand allongement, comme renfort circonférentiel assurant l'ancrage des éléments renforçants de carcasse. On propose ci-dessous de respecter des règles géométriques de construction pour l'architecture du bourrelet. Ces règles peuvent être utilisées en combinaison avec le type de câble défini ci-dessus, ou bien indépendamment de ce type de câble. Ces règles de construction peuvent donc être utilisées quel que soit l'élément renforçant circonférentiel utilisé, même si l'on remplace le câble 2 par des câbles textiles ou par des renforts mono-filamentaires, quelle que soit la nature et la géométrie de ceux-ci. Notons que, de préférence, l'élément renforçant circonférentiel doit jouir d'une aptitude à l'allongement assez grande. Si l'on emploie un fil tringle (mono-filament métallique), c'est un fil à grand allongement (voir par exemple la courbe T à la figure 5).

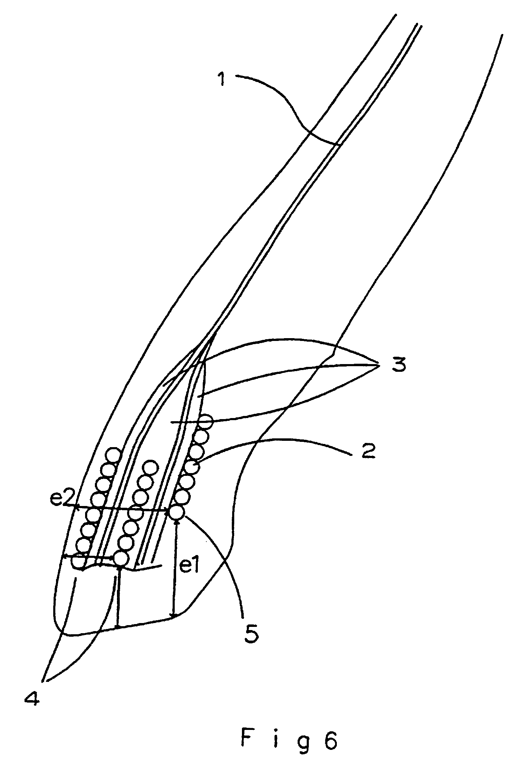

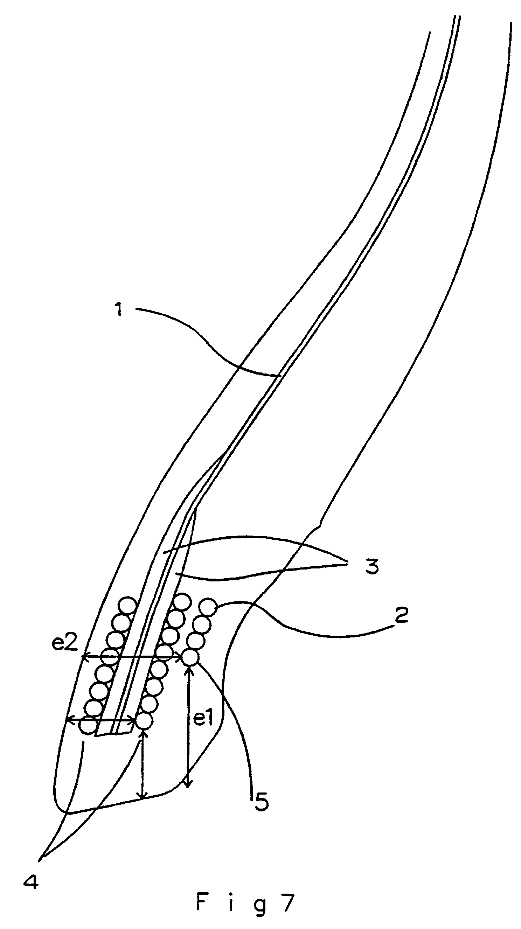

Lorsque par exemple le dimensionnement du bourrelet et/ou les choix de matériaux rendent le bourrelet relativement peu compact, il est avantageux de décaler radialement vers le haut le bas de pile 5 axialement la plus à l'extérieur, comme illustré aux figures 6 et 7. Ainsi, lorsqu'il y a au moins deux piles d'éléments renforçants circonférentiels 2 bordant latéralement les éléments renforçants de carcasse, il y a un décalage radial entre la partie radialement la plus basse de ladite pile 5 et des piles 4 voisines. Cela contribue aussi à limiter la sollicitation des câbles lors du démontage du pneu. De préférence, la partie radialement la plus basse de chaque pile est décalée radialement vers le haut par rapport à la partie radialement la plus basse de la pile adjacente du côté axialement intérieur.

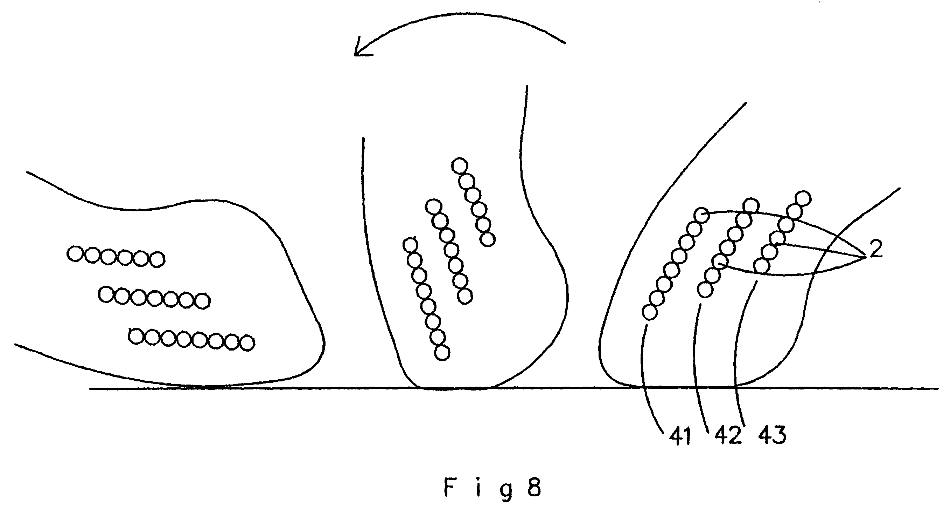

Dans le même esprit, la spire la plus basse de chaque pile 41, 42, 43 (voir figure 8) est située à un niveau radial tel que, lors d'un basculement du bourrelet, elle n'est pas contrainte à grandir en diamètre plus que d'une valeur limitant l'allongement du câble à un niveau qu'il peut supporter sans dommage. Autrement dit, la surtension des spires les plus sollicitées reste faible. Notons que l'augmentation du périmètre des spires concernées n'est pas proportionnelle à ce qui peut apparaître comme une augmentation de diamètre à la figure 8. En effet, on a expliqué ci-dessus que la déformation ne concerne par de façon homogène tout le pourtour de la spire en question. La sollicitation provoquant le basculement du bourrelet est une sollicitation locale. Notons aussi que, au moment où le bourrelet s'appuie sur la pointe (position centrale aux figures 8 et 3), la pointe se déforme, notamment sous l'effet de contraintes de cisaillement agissant à ce moment sur une épaisseur relativement faible, ce qui limite l'extension que subissent les différentes spires.

Sous un autre aspect, on peut tenir plus exactement compte de la géométrie du bourrelet, voire des duretés différentes des produits que l'on peut rencontrer. Aux figures 6 et 7, on a visualisé les distances totales $e_1$ et $e_2$, $e_1$ étant la distance dans la direction radiale séparant la spire la plus basse de la surface du bourrelet devant venir en contact avec le siège de la jante (ou de son prolongement le cas échéant) et $e_2$ étant la distance dans la direction axiale séparant la spire la plus basse de la surface du bourrelet du côté de la cavité interne du pneumatique, c'est à dire en rejoignant le côté axialement intérieur. Pour que la spire considérée ne subisse pas une surtension préjudiciable, il convient en première approximation (c'est à dire en supposant que la dureté des différents produits croisés le long des segments marqués $e_1$ et $e_2$ aux figures 6 et 7) que $e_2$ soit plus petit ou égal à $e_1$. En tenant compte plus précisément de la nature exacte des différents constituants, et en considérant que $e_{1j}$ est l'épaisseur de chaque produit qui sépare radialement la spire radialement la plus basse d'une pile quelconque de la face radialement inférieure du bourrelet, et que $e_{2i}$ est l'épaisseur de chaque produit qui sépare radialement la spire radialement la plus basse d'une pile quelconque de la face axialement intérieure du bourrelet, et que $G_{1j}$ et $G_{2i}$ sont les modules de Young respectifs des produits considérés, alors le critère de conception peut s'exprimer comme suit :

$$\sum_i e_{2i} * G_{2i} \leq \sum_j e_{1j} * G_{1j}$$

Il est ainsi proposé une architecture dans laquelle chaque spire des piles 4 ou 5 voit son niveau de tension diminuer lors du basculement du bourrelet, ce qui conduit à diminuer le niveau de serrage et à faciliter le démontage. Les règles proposées sont expérimentales. Le résultat recherché est que, pendant que le bourrelet bascule, il ne subissent pas d'extension préjudiciable. Dès que le bourrelet a quitté son siège, il se détend, même du côté axialement intérieur de la roue, là où le siège est souvent prolongé par une zone en générale cylindrique assez large (creux de jante décalé axialement vers l'extérieur). Ainsi, l'essentiel est que, au cours du basculement, chaque spire ne soit pas contrainte de passer à une position radiale supérieure à sa position de référence dans le bourrelet non sollicité en rotation (voir figure 8).

## Revendications

**1.** Pneumatique comportant des flancs se terminant par des bourrelets, ceux-ci étant conçus pour être montés sur une jante, ledit pneumatique comportant une armature de carcasse (1) passant dans les flancs et rejoignant les bourrelets, l'un au moins desdits bourrelets comprenant :

- des éléments renforçants de carcasse allant de la partie radialement basse du bourrelet vers le flanc, chaque bourrelet étant dépourvu de retournement de la carcasse autour d'une tringle, les éléments renforçants de carcasse étant disposés en un ou plusieurs alignements, ceux-ci dessinant approximativement, à l'intérieur de chaque alignement, un tronc de cône partiel d'axe confondu avec l'axe de rotation du pneumatique,
- au moins deux piles d'éléments renforçants circonférentiels (2) bordant latéralement les éléments renforçants de carcasse,

**caractérisé en ce que** la partie radialement la plus basse de la pile axialement la plus à l'extérieur (5) est décalée radialement vers le haut par rapport à la partie radialement la plus basse de la pile (4) adjacente.

**2.** Pneumatique comportant des flancs se terminant par des bourrelets, ceux-ci étant conçus pour être montés sur une jante, ledit pneumatique comportant une armature de carcasse (1) passant dans les flancs et rejoignant les bourrelets, l'un au moins desdits bourrelets comprenant:

- des éléments renforçants de carcasse allant de la partie radialement basse du bourrelet vers le flanc,
- au moins deux piles d'éléments renforçants circonférentiels (2) bordant latéralement les éléments renforçants de carcasse,
- des matériaux tels que $e_{1j}$ est l'épaisseur de chaque produit qui sépare radialement la spire radialement la plus basse d'une pile quelconque de la face radialement inférieure du bourrelet, et que $e_{2i}$ est l'épaisseur de chaque produit qui sépare radialement la spire radialement la plus basse d'une pile quelconque de la face axialement intérieure du bourrelet, et que $G_{1j}$ et $G_{2i}$ sont les modules de Young respectifs des produits considérés,

**caractérisé en ce que** lesdits matériaux respectent la règle suivante :

$$\sum_i e_{2i} * \overline{G}_{2i} \le \sum_j e_{1j} * \overline{G}_{1j}$$

**Patentansprüche**

**1.** Luftreifen, der Seitenwände umfasst, die durch Reifenwülste begrenzt sind, die für die Montage auf eine Felge konzipiert sind, wobei der Luftreifen eine Karkassbewehrung (1) aufweist, die durch die Seitenwände hindurchgeht und bis zu den Wülsten reicht, wobei mindestens einer der Wülste umfasst:

- Verstärkungselemente der Karkasse, die sich vom radial unteren Teil des Wulstes zur Seitenwand hin erstrekken, wobei bei keinem der Wülste die Karkasse um den Wulstkern geschlungen ist, wobei die Verstärkungselemente der Karkasse in einer oder mehreren Reihen angeordnet sind, wobei diese innerhalb jeder Reihe näherungsweise einen partiellen Kegelstumpf beschreiben, dessen Achse mit der Rotationsachse des Luftreifens zusammenfällt,
- mindestens zwei Stapel von in Umfangsrichtung angeordneten Verstärkungselementen (2), die die Verstärkungselemente der Karkasse seitlich einfassen,

**dadurch gekennzeichnet, dass** der radial unterste Teil des axial am weitesten außen angeordneten Stapels (5) radial nach oben verschoben ist, bezogen auf den radial untersten Teil des benachbarten Stapels (4).

**2.** Luftreifen, der Seitenwände umfasst, die durch Reifenwülste begrenzt sind, die für die Montage auf eine Felge konzipiert sind, wobei der Luftreifen eine Karkassbewehrung (1) aufweist, die durch die Seitenwände hindurchgeht und bis zu den Wülsten reicht, wobei mindestens einer der Wülste umfasst:

- Verstärkungselemente der Karkasse, die sich vom radial unteren Teil des Wulstes zur Seitenwand hin erstrekken,
- mindestens zwei Stapel von in Umfangsrichtung angeordneten Verstärkungselementen (2), die die Verstärkungselemente der Karkasse seitlich einfassen,
- Materialien, für die $e_{1j}$ die Dicke jedes Produkts ist, das radial die radial unterste Windung eines beliebigen Stapels von der radial unteren Fläche des Wulstes trennt, und für die $e_{2i}$ die Dicke jedes Produkts ist, das radial die radial unterste Windung eines beliebigen Stapels von der axial inneren Fläche des Wulstes trennt, und für die $G_{1j}$ und $G_{2i}$ die jeweiligen Young-Moduln der betreffenden Produkte sind,

**dadurch gekennzeichnet, dass** diese Materialien die folgende Regel erfüllen:

$$\sum_i e_{2i} * G_{2i} \le \sum_j e_{1j} * G_{1j}$$

**Claims**

**1.** A tyre comprising sidewalls which terminate in beads, the latter being designed to be mounted on a rim, said tyre comprising a carcass reinforcement (1) which passes into the sidewalls and joins the beads, one at least of said beads comprising:

- carcass-reinforcing elements which extend from the radially bottom part of the bead towards the sidewall, each bead being devoid of any upturn of the carcass about a bead wire, the carcass-reinforcing elements being arranged in one or more alignments, the latter describing approximately, within each alignment, a partial truncated cone the axis of which coincides with the axis of rotation of the tyre,
- at least two stacks of circumferential reinforcing elements (2) laterally bordering the carcass-reinforcing elements,

**characterised in that** the radially lowermost part of the axially outermost stack (5) is shifted radially upward with respect to the radially lowermost part of the adjacent stack (4).

2. A tyre comprising sidewalls which terminate in beads, the latter being designed to be mounted on a rim, said tyre comprising a carcass reinforcement (1) which passes into the sidewalls and joins the beads, one at least of said beads comprising:

   - carcass-reinforcing elements which extend from the radially bottom part of the bead towards the sidewall,
   - at least two stacks of circumferential reinforcing elements (2) laterally bordering the carcass-reinforcing elements,
   - materials such that $e_{1j}$ is the thickness of each product which radially separates the radially lowermost helix of any stack from the radially lower face of the bead, and that $e_{2i}$ is the thickness of each product which radially separates the radially lowermost helix of any stack from the axially inner face of the bead, and that $G_{1j}$ and $G_{2i}$ are the respective Young's moduli of the products in question,

   **characterised in that** said materials satisfy the following rule:

$$\sum_i e_{2i} * G_{2i} \leq \sum_j e_{1j} * G_{1j}$$

1

3

2

21

4

Fig 1

F i g 2

Fig 3

Fig 4

Fig 5

F i g 6

F i g 7

Fig 8